(19) Europäisches Patentamt
European Patent Office
Office européen des brevets

(11) Veröffentlichungsnummer: **0 571 612 B1**

# (12) EUROPÄISCHE PATENTSCHRIFT

(45) Veröffentlichungstag der Patentschrift: **19.07.95**

(51) Int. Cl.[6]: **C09K 7/02**

(21) Anmeldenummer: **93901031.0**

(22) Anmeldetag: **16.12.92**

(86) Internationale Anmeldenummer:
**PCT/EP92/02920**

(87) Internationale Veröffentlichungsnummer:
**WO 93/12194 (24.06.93 93/15)**

## (54) BOHRSPÜLZUSAMMENSETZUNG UND VERFAHREN ZUR FILTRATREDUZIERUNG VON GEMISCHTE METALLHYDROXIDE ENTHALTENDEN BOHRSPÜLZUSAMMENSETZUNGEN.

(30) Priorität: **17.12.91 DE 4141605**

(43) Veröffentlichungstag der Anmeldung:
**01.12.93 Patentblatt 93/48**

(45) Bekanntmachung des Hinweises auf die Patenterteilung:
**19.07.95 Patentblatt 95/29**

(84) Benannte Vertragsstaaten:
**DE FR GB IT NL**

(56) Entgegenhaltungen:
**EP-A- 0 207 810**
**EP-A- 0 501 069**
**US-A- 3 284 353**
**US-A- 4 652 384**
**US-A- 4 944 634**

(73) Patentinhaber: **SKW Trostberg Aktiengesellschaft**
**Dr.-Albert-Frank-Strasse 32**
**D-83308 Trostberg (DE)**

(72) Erfinder: **PLANK, Johann**
**Gräfin-Adelheid-Strasse 9**
**D-8223 Trostberg (DE)**

(74) Vertreter: **Huber, Bernhard, Dipl.-Chem. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08 20**
**D-81635 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Zum Abteufen von Erdöl und Erdgasbohrungen werden sogenannte Bohrspülungen (Bohrspülzusammensetzungen) eingesetzt, die entweder auf Wasser- oder auf Ölbasis aufgebaut sein können. Bei den sogenannten wasserbasischen Spülungen verwendet man meistens ein Tonmineral als Viskositätsgeber. Häufig eingesetzte Tonmineralien sind hierbei Bentonit oder Attapulgit. Der Nachteil solcher Ton-Wasser-Spülungen besteht darin, daß bei der zur Erzielung einer ausreichenden Austragsfähigkeit des Bohrkleins notwendigen Tonkonzentration die sogenannte plastische Viskosität der Spülung sehr hoch ist. Es ist bekannt, daß eine hohe plastische Viskosität den Bohrfortschritt verlangsamt und damit als ungünstig anzusehen ist.

Aus der US-Patentschrift 4 664 843 ist ein Zusatzmittel auf Basis eines gemischten Metallhydroxides bekannt, welches die vorstehend beschriebenen Nachteile von wäßrigen Bentonitsuspensionen beseitigt. Ein Problem der mit dem gemischten Metallhydroxid behandelten Bohrspülung besteht weiterhin darin, daß diese Flüssigkeit mit üblicherweise in Bohrspülungen verwendeten anionischen Filtratreduzierern ein ungewöhnliches Verhalten zeigt. Dies besteht darin, daß anionische Filtratreduzierer in Abhängigkeit von der jeweiligen Dosierung die Bohrspülung entweder stark verdünnen (d.h. die Viskosität bricht zusammen) oder zu einer unerwünschten Erhöhung der plastischen Viskosität führen. Ähnliche, jedoch vom Ausmaß her geringere Effekte sind bei der Anwendung üblicher nicht-ionischer Filtratreduzierer wie z.B. Stärke oder Guar gum zu verzeichnen. Da die Kontrolle der Filtrateigenschaften einer Bohrspülung wesentliche Voraussetzung für ihren erfolgreichen Einsatz ist, ergibt sich hieraus eine starke Einsatzbeschränkung für die Spülung auf Basis der gemischten Metallhydroxide.

Der Erfindung liegt daher die Aufgabe zugrunde, eine Bohrspülzusammensetzung und ein Verfahren für gemischte Metallhydroxide enthaltende Bohrspülzusammensetzungen zu entwickeln, welches die genannten Nachteile des Standes der Technik nicht aufweist, sondern gute Filtrat reduzierende Eigenschaften aufweist und gleichzeitig die speziellen rheologischen Eigenschaften dieser Spülzusammensetzung nicht wesentlich verändert.

Diese Aufgabe wird erfindungsgemäß dadurch gelöst, daß man als Filtrat reduzierendes Mittel ein mit Hydroxyethyl- und/oder Hydroxypropylgruppen teilweise verethertes Polysaccharid, dessen Veretherungsgrad 0,02 bis 2,5 beträgt in einer Menge von 0,1 bis 7 Gew.-%, bezogen auf das Gesamtgewicht der Bohrspülung einsetzt. Es hat sich nämlich überraschenderweise gezeigt, daß die erfindungsgemäß eingesetzten nicht-ionischen, Filtrat reduzierenden Mittel keinen stärkeren Effekt auf die Viskosität der mit gemischten Metallhydroxiden versetzten Spülungen ausüben, obwohl die üblichen nicht-ionischen Zusatzmittel diese unerwünschte Eigenschaft aufweisen.

Beim Verfahren der Erfindung werden Bohrspülzusammensetzungen auf Basis von gemischten Metallhydroxiden verwendet, wie sie aus der US-PS 4 664 843 bekannt sind. Es ist erfindungswesentlich, daß als Filtrat reduzierendes Mittel ein mit Hydroxyethyl- und/oder Hydroxypropylgruppen teilweise verethertes Polysaccharid eingesetzt wird, wobei als Polysaccharid insbesondere Stärke, Johannisbrotkernmehl, Guar gum oder Cellulose in Betracht kommen. Das Polysaccharid kann für die Veretherung in unsubstituierter oder substituierter Form eingesetzt werden, wobei noch freie OH-Gruppen zur Veretherung vorhanden sein müssen. Als bevorzugte substituierte Basis-Polysaccharide, in welche die Hydroxyethyl- oder/und Hydroxypropylethergruppen eingeführt werden, finden Derivate mit Carboxymethylgruppen und einem Substitutionsgrad von $< 0,2$ Verwendung.

Es hat sich als besonders vorteilhaft erwiesen, daß die teilweise veretherten Polysaccharide einen Veretherungsgrad von 0,1 bis 1,2 aufweisen, weil dann die erfindungsgemäß erzielten Vorteile besonders stark ausgeprägt sind. Als Veretherungsgrad ist hierbei die durchschnittliche Anzahl der an eine Glucoseeinheit gebundenen Hydroxyethyl- oder Hydroxypropylgruppen zu verstehen. Die erfindungsgemäß eingesetzten Filtrat reduzierenden Mittel bzw. ihre Herstellung sind aus der Literatur bekannt. So werden insbesondere Hydroxypropylstärke in der US-PS 4 003 883, Hydroxypropylguar in der US-PS 4 025 443, Hydroxyethyl- sowie Hydroxypropylcellulose in der US-PS 2 572 039 sowie Carboxymethylhydroxyethylcellulose in der US-PS 2 618 595 sowie in der US-PS 3 284 353 beschrieben. Die Herstellung dieser Mittel erfolgt üblicherweise durch Umsetzung der entsprechenden Basis-Polysaccharide mit Ethylen- bzw. Propylenoxid (vgl. "Starch and Its Derivatives" 4. Ed. J.A. Radley, Chapman and Hall Ltd. London 1968).

Gemäß einer bevorzugten Ausführungsform der Erfindung können die teilweise veretherten Polysaccharide zusätzlich noch weitere kationische oder anionische Substituenten mit einem Substitutionsgrad von $< 0,2$ aufweisen, wobei als kationische Substituenten insbesondere quarternäre Ammoniumgruppen der Formel

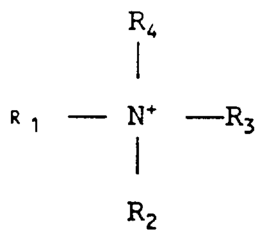

in Frage kommen, wobei $R_1$, $R_2$, $R_3$, $R_4$ = H oder einen $C_1$- bis $C_4$-Alkylrest bedeuten (vgl. beispielsweise US 4 003 883). Als besonders bevorzugte anionische Substituenten sind Carboxymethylgruppen anzusehen, die üblicherweise durch Umsetzung der entsprechenden mit Alkali vorbehandelten Polysaccharide mit Chloressigsäure hergestellt werden.

Durch diese Zweitsubstitution können unter Umständen vorteilhafte Effekte erzielt werden. So ist es beispielsweise im Falle der Stärke bekannt, daß durch die Einführung der Carboxymethylgruppen das Polymer gegen Bakterienabbau geschützt wird und zur Verbesserung der Dispergierbarkeit des Mittels in der Bohrspülung beiträgt. Die Begrenzung des Zweitsubstitutionsgrades auf < 0,2 ergibt sich aus der Tatsache, daß bei höherem Anteil der anionischen oder kationischen Gruppen der erfindungsgemäß beseitigte unerwünschte Effekt auf die Rheologie der mit gemischten Metallhydroxiden behandelten Spülungen wieder eintritt. Schließlich ist es auch möglich, beispielsweise zur Erhöhung der Thermostabilität, die Stärke zu vernetzen, wobei als Vernetzer di- oder trifunktionelle Verbindungen wie z.B. $POCl_3$, Cyanurchlorid oder Epichlorhydrin entsprechend der US-PS 4 652 384 eingesetzt werden können.

Die nach dem erfindungsgemäßen Verfahren hergestellten Bohrspülzusammensetzungen auf Basis von gemischten Metallhydroxiden, die das Filtrat reduzierende Mittel in einer Menge von 0,1 bis 7 Gew.-%, vorzugsweise 1 bis 3 Gew.-%, bezogen auf das Gesamtgewicht der Bohrspülung enthalten, zeichnen sich einmal durch die gut Filtrat reduzierenden Eigenschaften sowie ihren geringen, d.h. für die Bohrpraxis akzeptablen, Einfluß auf die Rheologie der Spülung aus.

Die nachfolgenden Beispiele sollen die Erfindung näher erläutern.

Beispiele

Bohrspülzusammensetzung:

350 ml destilliertes Wasser
7 g Wyoming-Bentonit (z.B. "Gold Seal" von Fa. Baroid, Houston/USA)
24 Std. rühren
0,7 g gemischtes Metallhydroxid (z.B. "POLYVIS" der Fa. SKW Trostberg AG, Deutschland)
der Formel $([Mg\ Al\ (OH)_{4,7}]_{3,33}Cl)_n$
pH-Wert mit wasserfreier Soda auf 10,5 einstellen 30 Minuten am "Hamilton Beach Mixer" bei Stufe
"low speed" mischen
Filtratreduzierer zusetzen
15 Minuten am "Hamilton Beach Mixer" bei Stufe
"low speed" mischen

Die Eigenschaften der Spülung werden nach den Vorschriften des American Petroleum Institute (API) gemäß Richtlinie RP 13 B-I bestimmt (siehe Tabelle).

Folgende Eigenschaften wurden bestimmt:

- Rheologie der Spülzusammensetzung, gemessen mit dem in der API-Richtlinie beschriebenen FANN-Viscometer, bei 600, 300, 200, 100, 6 und 3 Umdrehungen pro Minute.
- PV = Plastische Viskosität der Spülung, berechnet nach API RP 13 B-I
- YP = Yield Point der Spülung, berechnet nach API RP 13 B-I
- Gelstärken der Spülung nach 10 Sekunden und 10 Minuten, gemessen mit dem FANN-Viscometer gemäß API RP 13 B-I
- API-FL = Fluid loss der Spülung nach 30 Minuten bei 7 bar. Differenzdruck und Raumtemperatur, bestimmt nach API RP 13 B-I

Wie die Versuche zeigen, lassen allein die erfindungsgemäßen Produkte die Rheologie der mit dem gemischten Metallhydroxid versetzten Spülung praktisch unbeeinflußt und weisen gleichzeitig die gewünschte Senkung des Filtratwertes auf.

Tabelle

| Filtrat reduzierendes Mittel | Dosierung Gew.-% | PV | Spülungseigenschaften YP lb/100 ft | Gelstärken 10"/10' | API-FL ml |
|---|---|---|---|---|---|
| DLW | - | 5 | 55 | 25/26 | 38 |
| 1) Stand der Technik | | | | | |
| a) nicht-ionische Produkte | | | | | |
| Stärke (Kartoffel) | 2.0 | 22 | 102 | 61/64 | 5.4 |
| Stärke (Mais) | 2.0 | 24 | 88 | 49/59 | 5.7 |
| Guar gum | 2.0 | 38 | 60 | 31/36 | 6.2 |
| Johannisbrotkernmehl | 2.0 | 45 | 97 | 40/93 | 5.9 |
| b) anionische Produkte | | | | | |
| CM-Cellulose (DS = 0.85) | 0.3 | 6 | 6 | 3/ 3 | 17.0 |
| CM-Cellulose (DS = 0.85) | 2.0 | 37 | 43 | 12/26 | 5.0 |
| Vinylsulfonat/Vinylamid-Copolymer | 0.3 | 9 | 12 | 5/13 | 13.0 |
| Vinylsulfonat/Vinylamid-Copolymer | 2.0 | 40 | 54 | 11/24 | 4.8 |
| 2) Erfindungsgemäße Produkte | | | | | |
| HP-Stärke DS = 0.4 | 2.0 | 7 | 56 | 28/29 | 4.5 |
| HE-Cellulose DS = 1.9 | 2.0 | 8 | 51 | 20/28 | 4.8 |
| HP-Guar DS = 0.5 | 2.0 | 4 | 48 | 20/24 | 5.3 |
| CMHP-Stärke (DS für CM = 0.1, DS für HP = 0.8) | 2.0 | 10 | 43 | 20/26 | 5.7 |

HP = Hydroxypropyl  
HE = Hydroxyethyl  
CM = Carboxymethyl  
DS = Veretherungsgrad

## Patentansprüche

**1.** Verfahren zur Filtratreduzierung von gemischte Metallhydroxide enthaltenden wäßrigen Bohrspülzusammensetzungen auf Basis von Tonmineralien,
**dadurch gekennzeichnet,**
daß man als Filtrat reduzierendes Mittel ein mit Hydroxyethyl- und/oder Hydroxypropylgruppen teilweise verethertes Polysaccharid dessen Veretherungsgrad 0,02 bis 2,5 beträgt in einer Menge von 0,1 bis 7 Gew.-%, bezogen auf das Gesamtgewicht der Bohrspülung einsetzt.

**2.** Verfahren nach Anspruch 1,
**dadurch gekennzeichnet,**
daß man ein Polysaccharid, ausgewählt aus der Gruppe Stärke, Johannisbrotkernmehl, Guar gum oder Cellulose als Basis des veretherten Polysaccharids verwendet.

**3.** Verfahren nach Anspruch 2,
**dadurch gekennzeichnet,**
daß die Basis für das veretherte Polysaccharid ein unsubstituiertes Polysaccharid ist.

**4.** Verfahren nach Anspruch 2,
**dadurch gekennzeichnet,**
daß die Basis für das veretherte Polysaccharid ein vorzugsweise mit Carboxymethylgruppen substituiertes Polysaccharid mit einem Substitutionsgrad < 0,2 ist.

**5.** Verfahren nach einem der Ansprüche 1 bis 4,
**dadurch gekennzeichnet,**
daß der Veretherungsgrad 0,1 bis 1,2 beträgt.

**6.** Verfahren nach einem der Ansprüche 1 bis 5,
**dadurch gekennzeichnet,**
daß man teilweise veretherte Polysaccharide einsetzt, die noch weitere kationische oder anionische Substituenten mit einem Substitutionsgrad von < 0,2 aufweisen.

**7.** Verfahren nach Anspruch 6,
**dadurch gekennzeichnet,**
daß als kationische Substituenten quarternäre Ammoniumgruppen der Formel

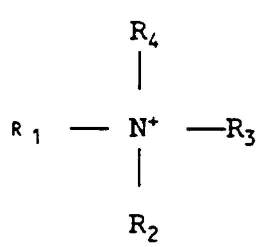

vorliegen, wobei $R_1$, $R_2$, $R_3$, $R_4$ = H oder $C_1$ - bis $C_4$ -Alkylgruppen bedeuten.

**8.** Verfahren nach Anspruch 6,
**dadurch gekennzeichnet,**
daß als anionische Substituenten Carboxymethylgruppen vorliegen.

**9.** Verfahren nach einem der Ansprüche 1 bis 8,
**dadurch gekennzeichnet,**
daß man die Stärke in vernetzter Form einsetzt.

**10.** Verfahren nach Anspruch 9,
**dadurch gekennzeichnet,**

daß man eine mit $POCl_3$, Cyanurchlorid oder Epichlorhydrin vernetzte Stärke einsetzt.

**11.** Wäßrige Bohrspülzusammensetzung auf Basis von Tonmineralien mit einem Zusatz von gemischten Metallhydroxiden,
**dadurch gekennzeichnet,**
daß sie zusätzlich als Filtrat reduzierendes Mittel ein mit Hydroxyethyl und/oder Hydroxypropylengruppen teilweise verethertes Polysaccharid dessen Veretherungsgrad 0,02 bis 2,5 beträgt in einer Menge von 0,1 bis 7 Gew.-%, bezogen auf das Gesamtgewicht der Bohrspülung enthält.

**12.** Bohrspülzusammensetzung nach Anspruch 11,
**dadurch gekennzeichnet,**
daß das Polysaccharid in einer Menge von 1 bis 3 Gew.-%, bezogen auf das Gesamtgewicht der Bohrspülung vorliegt.

## Claims

**1.** Process for the filtrate reduction of aqueous drilling fluid compositions based on clay minerals containing mixed metal hydroxides,
**wherein**
a polysaccharide that is partially etherified with hydroxyethyl and/or hydroxypropyl groups and whose degree of etherification is 0.02 to 2.5 is used as a filtrate reducing agent in an amount of 0.1 to 7 % by weight in relation to the total weight of drilling fluid.

**2.** Process as claimed in claim 1,
**wherein**
a polysaccharide from the group comprising starch, locust bean gum, guar gum or cellulose is used as a basis for the etherified polysaccharide.

**3.** Process as claimed in claim 2,
**wherein**
the basis for the etherified polysaccharide is an unsubstituted polysaccharide.

**4.** Process as claimed in claim 2,
**wherein**
the basis for the etherified polysaccharide is a polysaccharide preferably substituted with carboxymethyl groups and with a degree of substitution of $< 0.2$.

**5.** Process as claimed in one of the claims 1 to 4,
**wherein**
the degree of etherification is 0.1 to 1.2.

**6.** Process as claimed in one of the claims 1 to 5,
**wherein**
partially etherified polysaccharides are used which also have further cationic or anionic substituents with a degree of substitution of $< 0.2$.

**7.** Process as claimed in claim 6,
**wherein**
quarternary ammonium groups of the formula

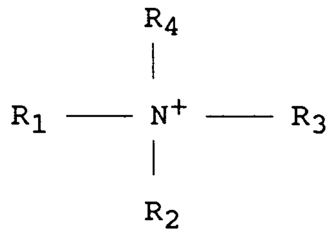

are present as cationic substituents in which $R_1$, $R_2$, $R_3$, $R_4$ = H or denote $C_1$ to $C_4$ alkyl groups.

8. Process as claimed in claim 6, **wherein** carboxymethyl groups are present as anionic substituents.

9. Process as claimed in one of the claims 1 to 8, **wherein** the starch is used in a cross-linked form.

10. Process as claimed in claim 9, **wherein** a starch cross-linked with $POCl_3$, cyanuric chloride or epichlorohydrin is used.

11. Aqueous drilling fluid composition based on clay minerals with an addition of mixed metal hydroxides, **wherein** it additionally contains a polysaccharide that is partially etherified with hydroxyethyl and/or hydroxypropyl groups and whose degree of etherification is 0.02 to 2.5 is used as a filtrate reducing agent in an amount of 0.1 to 7 % by weight in relation to the total weight of drilling fluid.

12. Drilling fluid composition as claimed in claim 11, **wherein** the amount of polysaccharide is present in an amount of 1 to 3 % by weight in relation to the total weight of the drilling fluid.

**Revendications**

1. Procédé de réduction du filtrat de compositions de boues de forage aqueuses à base de minéraux d'argile et contenant des hydroxydes métalliques mixtes, caractérisé en ce que l'on utilise comme agent réducteur du filtrat un polysaccharide partiellement éthérifié avec des groupes hydroxyéthyle et/ou hydroxypropyle, dont le degré d'éthérification est compris entre 0,02 et 2,5, en une quantité de 0,1 à 7 % en masse par rapport à la masse totale de boue de forage.

2. Procédé selon la revendication 1, caractérisé en 0e que l'on utilise comme base du polysaccharide éthérifié un polysaccharide choisi dans le groupe constitué par l'amidon, la farine de caroube, la gomme guar ou la cellulose.

3. Procédé selon la revendication 2, caractérisé en ce que la base du polysaccharide éthérifié est un polysaccharide non substitué.

4. Procédé selon la revendication 2, caractérisé en ce que la base du polysaccharide éthérifié est un polysaccharide substitué de préférence par des groupes carboxyméthyle, ayant un degré de substitution inférieur à 0,2.

5. Procédé selon l'une des revendications 1 à 4, caractérisé en ce que le degré d'éthérification est compris entre 0,1 et 1,2.

6. Procédé selon l'une des revendications 1 à 5, caractérisé en ce que l'on utilise un polysaccharide partiellement éthérifié qui contient encore d'autres substituants cationiques ou anioniques et qui a un degré de substitution inférieur à 0,2.

7. Procédé selon la revendication 6, caractérisé en ce que, en tant que substituants cationiques, il y a des groupes ammonium quaternaires de formule

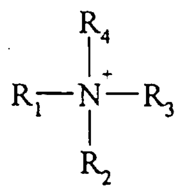

dans laquelle $R_1$, $R_2$, $R_3$, $R_4$ représentent H ou des groupes alkyle en $C_1$-$C_4$.

8. Procédé selon la revendication 6, caractérisé en ce que, comme substituants anioniques, il y a des groupes carboxyméthyle.

9. Procédé selon l'une des revendications 1 à 8, caractérisé en ce que l'on utilise de l'amidon sous forme réticulée.

10. Procédé selon la revendication 9, caractérisé en ce que l'on utilise un amidon réticulé avec du $POCl_3$, du chlorure de cyanuryle ou de l'épichlorhydrine.

11. Composition de boue de forage aqueuse à base de minéraux d'argile et contenant de plus des hydroxydes métalliques mixtes, caractérisée en ce qu'elle contient en outre, comme agent réducteur du filtrat, un polysaccharide partiellement éthérifié avec des groupes hydroxyéthyle et/ou hydroxypropylène, dont le degré d'éthérification est compris entre 0,02 et 2,5, en une quantité de 0,1 à 7 % en masse par rapport à la masse totale de boue de forage.

12. Composition de boue de forage selon la revendication 11, caractérisée en ce que le polysaccharide est présent en une quantité comprise entre 1 et 3 % en masse par rapport à la masse totale de la boue de forage.